# EUROPÄISCHE PATENTSCHRIFT

(11) **EP 0 870 654 B1**
(45) Veröffentlichungstag und Bekanntmachung des Hinweises auf die Patenterteilung: **14.05.2003**
(21) Anmeldenummer: 98105288.9
(22) Anmeldetag: 24.03.1998
(51) Int. Cl.: B60R 25/00

(54) **Vorrichtung und Verfahren zur fahrerspezifischen Einstellung von Fahrzeugeinrichtungen**
Device and method to set driver preferences in vehicle devices
Dispositif et procédé pour l'ajustement des réglages personnels pour les dispositifs d'un véhicule

(30) Priorität: 09.04.1997 DE 19714556
(43) Veröffentlichungstag der Anmeldung: 14.10.1998
(73) Patentinhaber: CLAAS Kommanditgesellschaft auf Aktien, 33428 Harsewinkel (DE)
(72) Erfinder: Autermann, Ludger, Dipl.-Ing., 48317 Drensteinfurt (DE)
(74) Vertreter: Hanewinkel, Lorenz, Dipl.-Phys.

(56) Entgegenhaltungen:
- DE-A- 3 308 803
- DE-A- 4 324 762
- DE-C- 19 532 067
- US-A- 5 229 648
- US-A- 5 334 974
- US-A- 5 513 107

## Beschreibung

Die Erfindung betrifft eine Vorrichtung zur fahrerspezifischen Einstellung von Fahrzeugeinrichtungsgegenständen (EG) eines Fahrzeuges mit einem fahrerspezifischen Identifikationsmittel, einem Schlüssel, das einen persönlichen Identifikator trägt, der durch ein diesen aufnehmenden Empfänger, ein Schloß, in einen Lokalprozessor übertragbar ist und wobei jeweils ein dem Identifikator zugeordneter Einstellparameterdatensatz ausgewählt wird, demgemäß über eine Stell- und/oder Regelvorrichtung Aktionssignale den Einrichtungsgegenständen zugeführt werden, von denen in die Stell- und/oder Regelvorrichtung ggf. Sensorsignale rückgekoppelt sind, und wobei der Lokalprozessor über eine Datenfunkverbindung mit einem Zentralprozessor verbindbar ist.

Eine derartige Vorrichtung, entsprechend dem Oberbegriff des Anspruchs 1, ist aus der DE 43 40 289 A bekannt. Bei dieser wird aufgrund der jeweiligen Identifikation des Benutzers, die mittels einer Datenträgerkarte vorgenommen werden kann, jeweils zugeordnete Einstellungen der Fahrzeugeinrichtungen, wie Sitz- und Spiegeleinstellungen, Federungskomfort, Motorbetriebsdaten und Getriebeeinstellungen sowie Grenzwerte, in internen Speicher des Steuercomputers ausgewählt und in Funktion gebracht. Für jeden zugelassenen Fahrer werden entsprechende Betriebsparameter eingespeichert und für künftigen Gebrauch vorgehalten. Außerdem ist es vorgesehen, daß von dem lokalen Steuercomputer ermittelten Diagnosedaten über ein anszuwählendes Kommunikationssystem, beispielsweise ein Funktelefon, an eine Servicezentrum übertragen werden und aus diesen Diagnosedaten abgeleitete Fehlermeldungen an den lokalen Prozessor rückübertragen und dem Fahrer zur Anzeige gebracht werden. Eine laufende Überwachung der Betriebsparameter und Betriebsdaten des Fahrbetriebes und deren zentrale Registrierung und Auswertung sowie eine zentrale Freigabe oder Sperrung des Fahrzeuges bei zugelassener bzw. nicht registrierter Identifikation bezüglich des Fahrzeuges sind nicht vorgesehen.

Es ist Aufgabe der Erfindung, eine Vereinfachung der Bedienung und eine Erweiterung der Funktionen der eingangs bezeichneten Vorrichtung zu erbringen.

Die Lösung besteht darin, daß der Lokalprozessor jeweils den Identifikator und ein Fahrzeugkennzeichen des jeweils benutzten Fahrzeuges über die Datenfunkverbindung an den Zentralprozessor meldet, der jeweils den Identifikator und das Fahrzeugkennzeichen in ein Schlüsselbenutzungsregister einträgt und dazu den jeweils zugehörigen Einstellparametersatz und ggf. weitere benutzungsrelevante Daten als Betriebsmeldungen speichert und für eine Auswertung bereithält.

Vorteilhafte Ausgestaltungen der Vorrichtung und des Verfahrens zur Nutzung sind in den Unter- und Nebenansprüchen angegeben.

Durch die Erfindung wird eine Verknüpfung der verschiedenen Funktionskomplexe des Fahrzeuges und/oder Arbeitsgerätes hergestellt und vereinheitlicht. Jeder Fahrer eines Fuhrparks besitzt einen persönlich gekennzeichneten Schlüssel oder eine Schlüsselkarte. Sobald er mit diesem Schlüssel ein Fahrzeug zu öffnen versucht, wird als erstes die vorgesehene Schlüsselfunktion ausgeführt, indem die Berechtigung zur Öffnung oder zum Starten des Fahrzeuges geprüft und ggf. die Öffnung oder Ausführung der Funktion freigegeben wird. Außerdem erfolgt eine Auswahl persönlich gespeicherter Einstelldaten der Einrichtungsgegenstände und darüberhinaus ggf. persönlich gespeicherter Betriebsparameter des Fahrzeuges und/oder des Arbeitsgerätes sowie die Aktivierung der verschiedenen Einstellungen und, soweit persönliche Berechtigungen dazu vorliegen, die Freigabe von Betriebsfunktionen. Weiterhin erfolgt jeweils bei einer Benutzung des Schlüssels bzw. der Schlüsselkarte eine Registrierung des Identifikators des Benutzerschlüssels im Speicher der Vorrichtung mit zugehöriger Uhrzeit. Diese Registereintragungen sind ggf. durch abrechnungsrelevante Daten ergänzt.

Die einzelnen Funktionskomplexe können unterschiedlich ausgestaltet sein, wobei die Zweckmäßigkeit der Ausbildungen durch die Zahl und Lizenzarten der Fahrer, die Zahl und Art der Fahrzeuge und Geräte sowie die zentrale oder dezentrale Organisationsart des Fuhrparks und die feste oder freizügige Zuordnung der Fahrer zu den Fahrzeugen jeweils bestimmt ist.

In einer ersten Ausführung ist in dem Schlüssel außer dem persönlichen Identifikator nach Art eines Systemschlüssels ein Hauptschlüsselkennzeichen oder mindestens ein Gruppenschlüsselkennzeichen oder mindestens ein

Einzelfahrzeugkennzeichen verkörpert. Die Schlüsselfunktion kann durch einen mechanischen Schließmechanismus oder ein elektrisches oder optoelektronisches Schloß gegeben sein. Der persönliche Indikator wird stets elektrisch über einen Kontakt oder kontaktlos, optoelektronisch oder per Funk, vom Schlüssel auf das Fahrzeug übertragen.

In einer weiteren Ausführung werden die Berechtigungen der einzelnen individuellen Schlüssel fahrzeugseitig durch einen Vergleich mit einer darin gespeicherten Tabelle oder durch Funkabfrage bei einem zentralen Berechtigungsregister überprüft bevor eine Öffnung oder Betriebsfreigabe erfolgt.

Hat ein Fahrzeug mehrere Schlösser, z.B. ein Kabinenschloß, ein Zündschloß, ein Tankdeckelschloß etc., so kann der persönliche Schlüssel mit getrennten Berechtigungen verbunden sein. Andererseits können von einem oder einzelnen mit einem Schlüssel zu bedienenden Schloß bzw. Schlössern aus je nach den Berechtigungen die einzelnen Riegel von zugehörigen Unterschlössern bedient werden. Auf diese Weise kann beispielsweise einem Fahrer ohne Maschinenlizenz nur das Fahren freigegeben werden oder einem Mechaniker ohne Fahrerlaubnis nur der Wartungsbetrieb ermöglicht werden.

Diese Ausführung mit der Freigabe der Einzelberechtigungen ist vorteilhaft mit einer zentralen Registrierung der Nutzung des Fahrzeuges und der Berechtigungen mit dem identifizierten Fahrer bzw. Nutzer verknüpft. Auch eine Abmeldung des Fahrers und der Fahrzeugnutzungsart erfolgt bei diesem System durch die Betätigung des Schlüssels jeweils beim Verschließen oder Außerfunktionssetzen der Vorrichtung. Das An- und Abmelden vom Fahrer und Fahrzeug dienen bevorzugt auch einem zentralen Flottenmanagement.

Ist das Schloß und/oder die Fahrzeubenutzung freigegeben, wird der Satz persönlicher Einstellparameter der Fahrzeugeinrichtungsgegenstände sowie ggf. von Betriebsparametern aktiviert und deren Inhalt zur Ausführung gebracht. Dieser Satz der persönlichen Einstellparameter ist in einer ersten Ausführung des Systems im Schlüssel gespeichert, wozu dieser individualisierbar speicherfähig ausgebildet ist und vorzugsweise drahtlos und kontaktlos, insbes. optoelektronisch, beim Schließvorgang seine codierte Information dem Fahrzeug zuführt. Neben dem bekannten codierten KFZ-Schlüsseln ist insbes. auch eine kontaktlos datenübertragende Chipkarte als Schlüsselkarte verwendbar, die bevorzug auch zum Einschreiben rückgesendeter Informationen, die beispielsweise einer Abrechnung oder Abbuchung dienen, geeignet ist.

In einer zweiten Ausführungsform ist der persönliche Satz der Einstellparameter im lokalen Prozessor des Fahrzeuges gespeichert; dies ist dann recht einfach, wenn ein Fahrer nur auf ganz bestimmten, sehr wenigen Fahrzeugen fährt. Die im Fahrzeug enthaltenen Einstellwerte sind leicht im laufenden Betrieb zu verändern und dann als neue individuelle Parameter für eine künftige Nutzung abzuspeichern.

In einer dritten Ausführung ist der Satz der individuellen Einstellparameter zentral gespeichert. Er wird zusammen mit den Berechtigungsdaten per Funk zum Fahrzeug übertragen, sobald der persönliche Identifikator mit der Funkanfrage dorthin gelangt. Dieses Verfahren erbringt die größte Freizügigkeit der Zuordnung jedes Fahrers zu jedem Fahrzeug bei sehr einfachem Schlüssel, der praktisch nur den persönlichen Identifikator enthalten muß.

Eine Vereinfachung der Bedienung des Schloßsystems läßt sich über den Bedienprozessor vorsehen, indem ein zum Schlüssel paralleler Gebrauch von persönlichen Codes vorgesehen ist. Diese Funktion entspricht einem persönlichen Zahlenschloß.

Wenn die Freigabefunktionen vom Zentralrechner per Funk erfragt werden, kann die Aufforderung zur Freigabe und zur Sperrung auch durch den jeweiligen Benutzer des Systems von einem lokalen Maschinenterminal oder von einem getrennten tragbaren Funkgerät aus abgegeben werden.

Die Schloß-Freigabefunktion läßt sich vorteilhaft durch bekannte unabhängige Sicherheitsfunktionen ergänzen, die bei einer unberechtigten Benutzung eines Schlüssels eine Freigabe verhindern oder Blockaden, Alarm oder dergleichen auslösen.

Als individuell einzustellende Funktionen einer Fahrzeugeinrichtung sind insbes. die Spiegel-, Sitz-, Kopfstütz-Lenksäule- und Gurthaltepunkteinstellungen bekannt. Darüberhinaus sind jedoch zahlreiche andere Einstellungen von Fahrzeug- und Betriebsparametern in modernen computergesteuerten Landmaschinen, Baumaschinen, Maschinen oder dergleichen vom computergestützten Bedienpult aus vorzunehmen. Auch solche werden erfindungsgemäß dem individuellen Datensatz zugeordnet abgespeichert, so daß jeweils nach einer bestimmten Wahl oder zum Abschluß einer Benutzung die gewählten Einstellungen dem Identifikator des Fahrers zugeordnet abgespeichert werden und bei einer späteren Nutzung unmittelbar abgerufen und bereitsgestellt werden. Hierbei sind neben weiteren Einrichtungsgegenständen der Fahrerkabine, wie Temperaturregler vom Heiz- und Klimagerät, Sende- und Lautstärkewahl vom
Funk- und Rundfunktgerät, auch die Wahl der Fahrstrategie, der Höchstgeschwindigkeit, der Motoreinstellung und der Ökonomieparameter zur Speicherung im persönlichen Einstellparametersatz sowie deren automatische Reaktivierung vorgesehen. Dies erbringt eine wertvolle Rüstzeitersparnis und gewährleistet, daß keine Irrtümer über die Maschineneinstellungen bei einer Übernahme bestehen, falls vorher Änderungen derselben oder Wartungseinstellungen vorgenommen wurden, die vom Normalbetrieb abweichen.

Außerdem erhält die Funkzentrale bevorzugt vollständig die Informationen: wer wann wo das Schloß betätigt hat, indem die entsprechenden Daten im Fahrzeug zusammengefaßt zur Zentrale gefunkt werden.

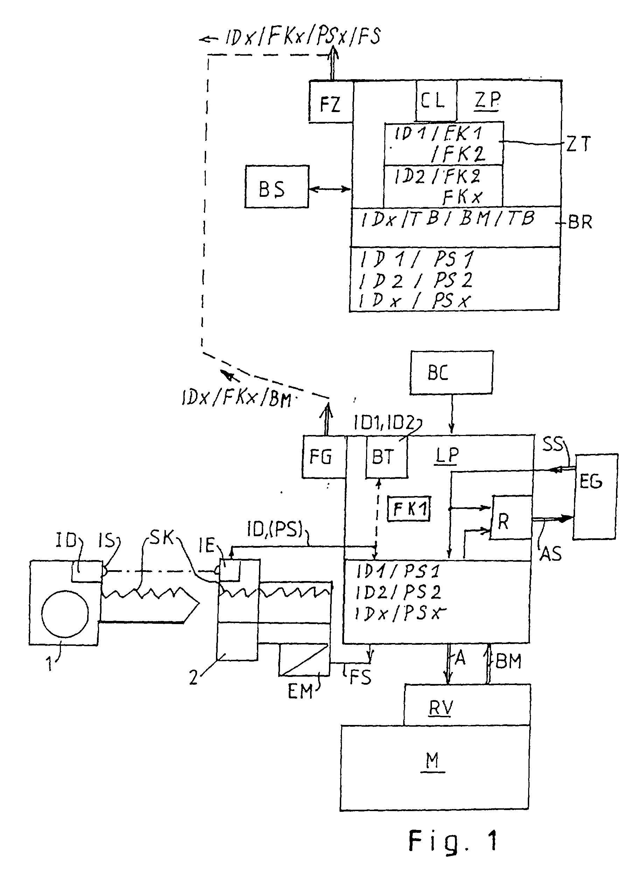

Vorteilhafte Ausgestaltungen sind in Figur 1 schematisch dargestellt.

Der Schlüssel 1 umfaßt einen Identifikator ID der beispielsweise mit einem elektrooptischen Sender IS bei einer Schlüsselbetätigung auf einen Empfänger IE im Schloß 2 übertragen wird. Zusätzlich kann der Schlüssel 1 eine mechanische Schlüsselkennung SK, die im Zusammenwirken mit dem Schloß 2 den Schließvorgang freigibt, tragen. Der Identifikator ID wird vom Schloß 2 an einen Lokalprozessor LP weitergegeben, wenn das Schloß mechanisch aufgrund der Kennung SK zu betätigen war oder unmittelbar, wenn ein elektronisches Schließ-Freigabe-Verfahren vorgesehen ist. In diesem Fall wird mit dem Identifikator ID mindestens eine codierte Fahrzeugkennung FK1, FK2, FKx in den Lokalprozessor LP übertragen und diese mit der dort gespeicherten Fahrzeugkennung FK1 verglichen. Bei einer Übereinstimmung wird mit dem Identifikator ID1, ID2, IDx, dort ein zugeordneter persönlicher Datensatz PS1, PS2, PSx angesprochen und in einem Steller oder Regler R in Aktionssignale AS von Einrichtungsgegenstände EG ggf. in Rückkopplung mit deren Sensorsignalen SS umgesetzt. Außerdem wird mindestens ein Aktionssignal A als Sollvorgabe an die Regelvorrichtung RV der Maschine M und/oder des Fahraggregates geleitet, die ggf. Betriebsmeldungen BM liefert.

Statt im Schlüssel die Kennungen der dem Fahrer zugeordneten Fahrzeuge zu halten, sind in einer anderen Ausführung die Identifikatoren ID1 - IDx der Berechtigten jeweils im Lokalprozessor LP in einer Berechtigungstabelle BT gespeichert, so daß nur der Identifikator zu übertragen und zu überprüfen ist.

Der Lokalprozessor LP steht mit einer Bedienkonsole BC in Verbindung, von der die individuellen Einstellungen, neue Sollvorgaben für Aktionssignale AS oder Betriebsaktionen A übernommen werden und jeweils unmittelbar oder auf eine Bedienanweisung hin zur jeweiligen aktivierten Identifikator ID1, ID2 - IDx des Benutzers in den persönlichen Datensatz PS1, PS2 - PSx zugeordnet gespeichert werden.

Beim Ende der Benutzung des Fahrzeuges durch einen Schlüsselinhaber oder auf eine Bedienanweisung des Fahrzeuges durch einen Schlüsselinhaber oder auf seine Bedienanweisung hin ist in einer Ausführung des Systems eine ausgelagerte Speicherung des Identifikators mit dem zugehörigen persönlichen Datensatz ID1/PS1; ID2/PS2; IDx/PSx über Funk in einem Zentralprozessor ZP vorgesehen. Die Funkverbindung zwischen dem mobilen Datenfunkgerät FG und der Funkzentrale FZ wird dann beim neuen Schloßbetätigen wieder genutzt, um durch Aufruf mit dem Identifikator IDx den zugehörigen persönlichen Datensatz PSx in den Lokalprozessor LP zurückzuübertragen.

In einer Ausführung, bei der die jeweils berechtigten Identifikatoren ID1 - IDx nicht im Lokalprozessor LP sondern nur zentral gespeichert sind, wird bei einem neuen Schließvorgang die jeweilige Fahrzeugkennung FKx mit dem jeweiligen Identifikator ID1 - IDx des benutzten Schlüssels 1 zum Zentralprozessor ZP gefunkt und dort die Berechtigung des Identifikators in einer Berechtigungs-Zuordnungstabelle ZT durch Vergleich ermittelt und, falls eine Berechtigung vorliegt, ein Freigabesignal FS mit dem jeweiligen Identifikator IDx und dem zugehörigen persönlichen Datensatz PSx an den Lokalprozessor LP zurückgesendet, worauf dieser die damit fälligen Aktionen veranlaßt und das Freigabesignal FS ggf. auf einen Entriegelungsmagneten EM gibt.

Eine Bedienstation BS am Zentralprozessor ZP gestattet Berechtigungen in die Berechtigungszuordnungstabelle ZT einzugeben und die gespeicherten Datensätze PS1 - PSx auf ihren Inhalt zu überprüfen und neue Eintragungen darein vorzunehmen. Die jeweiligen Schlüsselbetätigungen werden anhand einer Uhr (CL) zusammen mit dem zugehörigen Fahrzeugkennzeichen FKx zusammen mit der jeweiligen Benutzungszeit TB und ggf. mit zugehörig gefunkten Betriebsmeldungen BM gespeichert und zur weiteren Auswertung bereitgehalten. Als Abrechnungsdaten werden z.B. Rüstzeiten, Betriebszeiten, der Ernteertrag, der Umfang und die Art einer Flächenbearbeitung und/oder Betriebsmittelverbräuche, mit dem Abschluß der Fahrzeug- und Gerätenutzung registriert.

Falls mehrere Personen in den Arbeitsprozeß einer Arbeitsmaschine involviert sind, lassen sich selbstverständlich auch deren Zulassung und parallelen Anwesenheiten und Tätigkeiten mit der Schlüsselidentifikation registrieren und freigeben.

Es liegt im Rahmen des fachmännischen Könnens, die verschiedenen Ausführungen auch in Kombinationen oder mit programmgesteuerter Auswahl anzuwenden.

## Patentansprüche

1. Vorrichtung zur fahrerspezifischen Einstellung von Fahrzeugeinrichtungsgegenständen (EG) eines Fahrzeuges mit einem fahrerspezifischen Identifikationsmittel, einem Schlüssel (1), das einen persönlichen Identifikator (ID, ID1 - IDx) trägt, der durch ein diesen aufnehmenden Empfänger, ein Schloß (2), in einen Lokalprozessor (LP) übertragbar ist und wobei jeweils ein dem Identifikator (ID, ID1 - IDx) zugeordneter Einstellparameterdatensatz (PS1 - PSx) ausgewählt wird, demgemäß über eine Stell- und/oder Regelvorrichtung (R) Aktionssignale (AS) den Einrichtungsgegenständen (EG) zugeführt werden, von denen in die Stell- und/oder Regelvorrichtung (R) ggf. Sensorsignale (SS) rückgekoppelt sind, und wobei der Lokalprozessor (LP) über eine Datenfunkverbindung (FG, FZ) mit einem Zentralprozessor (ZP) verbindbar ist,
**dadurch gekennzeichnet, daß** der Lokalprozessor (LP) jeweils den Identifikator (ID, ID1 - IDX) und ein Fahrzeugkennzeichen (FK1 - FKx) des jeweils benutzten Fahrzeuges über die Datenfunkverbindung (FG, FZ) an den Zentralprozessor (ZP) meldet, der jeweils der Identifikator (ID, ID1 - IDx) und das Fahrzeugkennzeichen (FK1, FKx) in ein Schlüsselbenutzungsregister (BR) einträgt und dazu den jeweils zugehörigen Einstellparametersatz (PS1 - PSx) und ggf. weitere benutzungsrelevante Daten als Betriebsmeldungen (BM) speichert und für eine Auswertung bereithält.

2. Vorrichtung nach Anspruch 1, **dadurch gekennzeichnet, daß** eine Zuordnungstabelle (ZT) der Fahrzeugkennzeichen (FK1 - FKx) zu den jeweils berechtigten Fahrzeugidentifikatoren (ID1- IDx) in dem Zentralprozessor (ZP) gespeichert ist und nur dann, wenn jeweils der durch den Funk gemeldete Identifikator (ID1 - IDx) und das Fahrzeugkennzeichen (FK1- FKx) in der Zuordnungstabelle (ZT) eingetragen sind, über die Datenfunkverbindung (FG, FZ) in dem Lokalprozessor (LP) der zugehörigen Einstellparametersatz (PS1 - PSx) freigegeben wird.

3. Vorrichtung nach Anspruch 2, **dadurch gekennzeichnet, daß** der Identifikator (ID, ID1 - IDx) jeweils mit einer im Lokalprozessor (LP) enthaltenen Berechtigungstabelle (BT) oder mit einer Zuordnungstabelle (ZT) von den Fahreridentifikatoren (ID1 - IDx) zu berechtigungsmäßig zugehörigen Fahrzeugkennzeichen (FK1 -FKx) zu überprüfen ist und jeweils im Berechtigungsfall der zugehörigen Schloßfreigabe- und Einstellparameterdatensatz (PS1 - PSx) aktiviert ist.

4. Vorrichtung nach Anspruch 3, **dadurch gekennzeichnet, daß** der Lokalprozessor (LP) jeweils im festgestellten Berechtigungsfall und -umfang ein Freigabesignal (FS) an mindestens einen lokalen Schloßentriegelungsmagneten (EM) oder ein steuerbares Funktionselement gibt.

5. Vorrichtung nach einem der vorstehenden Ansprüche, **dadurch gekennzeichnet, daß** der Zentralprozessor (ZP) mit einer Bedienstation (BS) verbunden ist, mit der die Zuordnungstabelle (ZT) zu modifizieren ist und auf das Benutzungsregister (BR) auswertend und modifizierend zuzugreifen ist.

6. Vorrichtung nach einem der vorstehenden Ansprüche, **dadurch gekennzeichnet, daß** der Lokalprozessor (LP) mindestens einen Aktionsausgang (A) zu einer Betriebssteuervorrichtung (RV) des Fahrzeuges und ggf. einer damit verbundenen Maschine (M) aufweist, die mindestens eine Betriebsmeldung (BM) an den Lokalprozessor (LP) zurückgibt, und daß der Aktionsausgang (A) mit einem Inhalt des jeweils aktivierten Einstellparameterdatensatzes (PS1 - PSx) gesteuert ist.

7. Vorrichtung nach einem der vorstehenden Ansprüche, **dadurch gekennzeichnet, daß** der Lokalprozessor (LP) mit einer Bedienkonsole (BC) verbunden ist, mit deren Eingabesignalen der jeweils aktivierte Schloßfreigabe- und Einstellparameterdatensatz (PS1 - PSx) abhängig von einer Betriebsarteinstellung modifiziert oder übersteuert wird.

8. Vorrichtung nach einem der vorstehenden Ansprüche, **dadurch gekennzeichnet, daß** in den Schloßfreigabe- und Einstellparametersatz (PS1 - PSx) die Betriebsmeldung(en) (BM) und/oder von den Einrichtungsgegenständen (EG) gemeldete Sensorsignale (SS) eingetragen sind.

9. Vorrichtung nach einem der vorstehenden Ansprüche, **dadurch gekennzeichnet, daß** der Aktionsausgang (A) eine Maximalgeschwindigkeit, obere und untere Schaltdrehzahlen, ökonomische Getriebebetriebszustandsvorgaben und/oder Motoreinstellungen steuert und als Betriebsmeldungen (BM) eine Benutzungszeit, Rüstzeiten, Arbeitszeiten, Betriebsmittelverbräuche, Arbeitsflächengrößen und/oder Ernteerträge von der Maschine (M) und dem Fahrzeug selbst an den Lokalprozessor (LP) gemeldet und laufend registriert werden und laufend oder spätestens bei einer abschließenden Schlüsselbetätigung zur weiteren Auswertung und Abrechnungen per Funk dem Zentralprozessor (ZP) übergeben und dort bereitgestellt werden.

10. Vorrichtung nach einem der vorstehenden Ansprüche, **dadurch gekennzeichnet, daß** der Schlüssel (1) eine zu dem Schloß (2) passende mechanische Schlüsselkennung (SK) trägt.

11. Vorrichtung nach Anspruch 10, **dadurch gekennzeichnet, daß** die Schlüsselkennung (SK) eine Schlüsselsystemkennung eines Haupt-, Gruppen- und Einzelschlüsselsystems ist.

12. Vorrichtung nach einem der vorstehenden Ansprüche,
**dadurch gekennzeichnet, daß** der Identifikator (ID, ID1 - IDx) im Schlüssel (1) oder einer als Schlüssel dienenden Identifikationskarte elektronisch verschlüsselt gehalten ist und über einen elektrischen Kontakt oder drahtlos oder einen optoelektronischen Koppler (IS - IE) vom Schlüssel (1) jeweils bei einer Betätigung in das entsprechend als Empfänger ausgebildete Schloß (2) übertragen und von diesem in den Lokalprozessor (LP) eingegeben wird.

## Claims

1. Device for adjusting the settings of on-board vehicle equipment (EG) in a motor vehicle to the requirements of a specific driver, comprising a driver-specific means of identification, a key (1) carrying a personal identifier (ID, ID1 - IDx) which by means of a receiver, a lock (2) which accepts said identifier, can be communicated to a local processor (LP) and in each case a setting parameter data record (PS1 - PSx) operatively associated with the identifier (ID, ID1 - IDx) is selected, actioning signals (AS) are accordingly sent via a final control and/or closed-loop controlling device (R) to the on-board equipment (EG), from which sensor signals (SS) are, if appropriate, fed back into the final control and/or closed-loop controlling device (R), and the local processor (LP) being adapted to be connected to a central processor (ZP) via a wireless data link (FG, FZ), **characterised in that** the local processor (LP) in each case reports the identifier (ID, ID1 - IDx) and a vehicle registration number (FK1 - FKx) of the particular vehicle being used, via the wireless data link (FG, FZ) to the central processor (ZP), which in each case enters the identifier (ID, ID1 - IDx) and the vehicle registration number (FK1, FKx) in a key usage register (BR) and for this purpose stores the respective associated setting parameter record (PS1 - PSx) and, if appropriate, additional usage-relevant data as service messages (BM) and holds them in readiness for making an evaluation.

2. Device according to claim 1, **characterised in that** a table (ZT) assigning the vehicle registration numbers (FK1 - FKx) to the respectively authorised vehicle identifiers (ID1 - IDx) is stored in the central processor (ZP) and the associated setting parameter record (PS1 - PSx) is only released in the local processor (LP) via the wireless data link (FG, FZ) once the respective radio-signalled identifier (ID1 - IDx) and the vehicle registration number (FK1 - FKx) have been entered in the assignments table (ZT).

3. Device according to claim 2, **characterised in that** the identifier (ID, ID1 - IDx) has in each case to be verified against an authorisation table (BT) contained in the local processor (LP) or against a table (ZT) assigning the driver identifiers (ID1 - IDx) to legitimately associated vehicle registration numbers (FK1 - FKx) and in each instance of authorisation the associated lock release and setting parameter data record (PS1 - PSx) is activated.

4. Device according to claim 3, **characterised in that** whenever authorisation and the scope thereof is confirmed, the local processor (LP) emits an enabling signal (FS) to at least one local lock release magnet (EM) or a controllable operating element.

5. Device according to any of the preceding claims, **characterised in that** the central processor (ZP) is connected to an operator's station (BS) which is used to modify the assignments table (ZT) and to consult the usage register (BR) in order to evaluate and modify it.

6. Device according to any of the preceding claims, **characterised in that** the local processor (LP) has at least one actioning output (A) to a service controller (RV) of the vehicle and, if appropriate, to a machine (M) linked thereto which sends back at least one service message (BM) to the local processor (LP), and that the actioning output (A) is controlled with a content of the particular setting parameter data record (PS1 - PSx) that has been activated.

7. Device according to any of the preceding claims, **characterised in that** the local processor (LP) is connected to an operator's console (BC), using the input signals from which the respective activated lock release and setting parameter data record (PS1 - PSx) is modified or overridden in dependence on an operating mode adjustment.

8. Device according to any of the preceding claims, **characterised in that** the service message(s) (BM) and/or sensor signals (SS) reported by the on-board equipment (EG) are entered in the lock release and setting parameter record (PS1 - PSx).

9. Device according to any of the preceding claims, **characterised in that** the actioning output (A) controls a maximum speed, upper and lower gear speeds, economic transmission service condition parameters and/or engine settings, and as service messages (BM) a usage time, tooling-up times, operating times, resources expended, areas of land worked and/or harvesting yields by the machine (M) and the vehicle itself are reported to the local processor (LP) and continually recorded and continually, or not later than when the key is operated for the final time, the same are transmitted by radio link to the central processor (LP) for further evaluation and computation and are there held in readiness.

10. Device according to any of the preceding claims, **characterised in that** the key (1) carries a mechanical key answer-back code (SK) which fits the lock (2).

11. Device according to claim 10, **characterised in that** the key answer-back code (SK) is a key system answer-back code for a master, party and individual key system.

12. Device according to any of the preceding claims, **characterised in that** the identifier (ID, ID1 - IDx) is kept electronically enciphered in the key (1) or an identification card which serves as the key, and each time it is actuated is transferred, via an electronic contact or by radio link or via an optoelectronic coupler (IS - IE), from the key (1) to the lock (2) which is correspondingly configured as a receiver, and from the latter is fed into the local processor (LP).

## Revendications

1. Dispositif pour l'ajustement des réglages personnels des dispositifs (EG) d'un véhicule automobile comprenant un moyen d'identification spécifique au conducteur, une clé (1), qui porte un identificateur personnel (ID, ID1 - IDx) transmissible à un processeur local (LP) par l'intermédiaire d'un récepteur qui l'accueille, une serrure (2) et un jeu de paramètres de réglage (PS1 - PSx), qui est coordonné à l'identificateur (ID, ID1 - Idx) et peut être respectivement sélectionné, des signaux d'actionnement (AS) étant adéquatement conduits, par l'intermédiaire d'un dispositif de commande et/ou de réglage (R ), aux dispositifs (EG) du véhicule automobile, certains signaux, en l'occurrence des signaux de détection (SS) ), étant réinjectés, le cas échéant, dans le dispositif de commande et/ou de réglage ( R) et le processeur local (LP) pouvant être raccordé à un processeur central (ZP) par l'intermédiaire d'une communication mobile de données (FG, FZ),
**caractérisé en ce que** le processeur local (LP) communique, par l'intermédiaire de la communication mobile de données (FG, FZ), l'identificateur (ID, ID1 - Idx) respectif et le numéro d'immatriculation (FK1 - FKx) du véhicule utilisé au processeur central (ZP) qui inscrit ledit identificateur (ID, ID1 - Idx) et ledit numéro minéralogique du véhicule (FK1, FKx) dans un registre d'utilisation de clés (BR) et mémorise, en outre, le jeu de paramètres afférent (PS1 - PSx) ainsi que, le cas échéant, d'autres données importantes en tant que messages de fonctionnement (BM) et les garde à disposition aux fins d'exploitation.

2. Dispositif selon la revendication 1,
**caractérisé en ce qu'**un tableau d'affectation (ZT) des numéros minéralogiques (FK1 FKx) de véhicules aux identificateurs (ID1 - Idx) respectivement autorisés est mémorisé dans le processeur central (ZP) et que le jeu de paramètres de réglage (PS1 . PSx) afférent n'est libéré, dans le processeur local (LP), par l'intermédiaire de la communication mobile de données (FG, FZ), que si l'identificateur (ID1 - Idx) et le numéro minéralogique (FK1 - FKx) du véhicule automobile concerné, annoncés par la communication mobile, figurent au tableau d'affectation (ZT).

3. Dispositif selon la revendication 2,
**caractérisé en ce que** l'identificateur (ID, ID1 - IDx) doit être respectivement vérifié à l'appui, d'une table d'autorisation (BT), mémorisée dans le processeur local (LP) ou d'une table d'affectation (ZT) des identificateurs (ID1 - Idx) de conducteurs aux numéros minéralogiques (FK1 - FKx) des véhicules automobiles et que le jeu de paramètres de libération du verrouillage et de réglage (PS1 - PSx) est activé en cas de justification.

4. Dispositif selon la revendication 3,
**caractérisé en ce que**,
dans chaque cas d'autorisation constatée, le processeur local (LP) lance un signal de libération (FS) à au moins un aimant de déverrouillage (EM) ou à un élément fonctionnel commandé.

5. Dispositif selon l'une des revendications précédentes,
**caractérisé en ce que** le processeur central (ZP) est relié à une station de commande (BS) qui permet de modifier la table d'affectation (ZT) et d'accéder au registre d'utilisation (BR) aux fins d'évaluation et de modification.

6. Dispositif selon l'une des revendications précédentes,
**caractérisé en ce que**
le processeur local (LP) présente, au moins, une sortie, d'actionnement (A) à destination d'un dispositif de- commande (RV) du véhicule et, le cas échéant, d'une machine (M) y raccordée qui retourne au moins un message de fonctionnement (BM) au processeur local (LP) et que la sortie d'actionnement (A) est commandée par le contenu du jeu de paramètres de réglage (PS1 - PSx) respectivement activé.

7. Dispositif selon l'une des revendications précédentes,
**caractérisé en ce que** le processeur local (LP) est relié à un pupitre de commande (BC) dont les signaux d'entrée permettent de modifier ou de « übersteuern » le jeux de paramètres de déverrouillage et de réglage (PS1 - PSx) respectivement activé.

8. Dispositif selon l'une des revendications précédentes,
**caractérisé en ce que** le/les messages de fonctionnement et opération (BM) et/ou les signaux de captage (SS) lancés par les dispositifs (EG) sont enregistrés dans le jeu de paramètres de déverrouillage et de réglage (PS1 - PSx).

9. Dispositif selon l'une des revendications précédentes,
**caractérisé en ce que** la sortie d'actionnement (A) commande une vitesse maximale, des nombres de tours de commutation supérieurs et inférieurs, des consignes d'état d'entraînement et/ou des réglages du moteur économiques, qu'un temps d'utilisation, des temps de mise en route et de travail, des consommations de moyens d'exploitation, des surfaces de travail et/ou des rendements de récolte de la part de la machine (M) et du véhicule automobile lui-même sont communiqués au processeur local (LP) et continuellement enregistrés, ces données étant transmises, par radiotransmission, au processeur central (ZP), constamment ou, au plus tard, après actionnement d'une clé, et mises à disposition.

10. Dispositif selon l'une des revendications précédentes,
**caractérisé en ce que** la clé (1) porte un indicatif d'identification mécanique (SK) qui est adapté à la serrure (2).

11. Dispositif selon la revendication 10,
**caractérisé en ce que** l'indicatif d'identification de la clé (SK) est une identification systématique d'un système de clés principales, de groupes de clés et de clés individuelles.

12. Dispositif selon l'une des revendications précédentes,
**caractérisé en ce que** l'identificateur (ID, ID1 - Idx) est codé électroniquement dans la clé (1) ou dans une carte d'identification en tenant lieu et est transmis, par l'intermédiaire d'un contact électrique ou sans fil ou d'un coupleur optoélectronique (IS - IE), à la serrure (2), conçue en tant que récepteur adéquat, d'où il est introduit dans le processeur local (LP).
